(19) Europäisches Patentamt
European Patent Office
Office européen des brevets

(11) EP 3 339 340 A1

(12) # EUROPÄISCHE PATENTANMELDUNG

(43) Veröffentlichungstag:
**27.06.2018 Patentblatt 2018/26**

(21) Anmeldenummer: **16205529.7**

(22) Anmeldetag: **20.12.2016**

(51) Int Cl.:
***C08G 2/22*** *(2006.01)* ***C08G 2/08*** *(2006.01)*
***C08G 2/38*** *(2006.01)* ***C08G 2/06*** *(2006.01)*
***C08G 18/56*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **VERFAHREN ZUR HERSTELLUNG EINES POLYOXYMETHYLEN-BLOCK-COPOLYMERS MIT ERHÖHTEM ANTEIL AN EINGEBAUTEM FORMALDEHYD**

(57) Die vorliegende Erfindung betrifft ein Verfahren zur Herstellung eines Polyoxymethylen-BlockCopolymers, umfassend die Schritte: Bereitstellen einer polymeren Starterverbindung mit mindestens zwei Zerewitinoff-aktiven H-Atomen und einer Katalysatorkomponente in einem Reaktionsgefäß; Eintragen von Formaldehyd in das Reaktionsgefäß und Eintragen eines Alkylenoxids in das Reaktionsgefäß. Die polymere Starterverbindung ist ein Polyethylenglykol und die Katalysatorkomponente weist einen Zinn umfassenden Katalysator und einen Bismut umfassenden Katalysator auf. Die Erfindung betrifft ebenfalls ein durch das erfindungsgemäße Verfahren erhältliche Polyoxymethylen-Block-Copolymer und dessen Einsatz in der Herstellung eines Polyurethanpolymers.

EP 3 339 340 A1

## Beschreibung

Die vorliegende Erfindung betrifft ein Verfahren zur Herstellung eines Polyoxymethylen-Block-Copolymers, umfassend die Schritte: Bereitstellen einer polymeren Starterverbindung mit mindestens zwei Zerewitinoff-aktiven H-Atomen und einer Katalysatorkomponente in einem Reaktionsgefäß; Eintragen von Formaldehyd in das Reaktionsgefäß und Eintragen eines Alkylenoxids in das Reaktionsgefäß. Die Erfindung betrifft ebenfalls ein durch das erfindungsgemäße Verfahren erhältliche Polyoxymethylen-Block-Copolymer und dessen Einsatz in der Herstellung eines Polyurethanpolymers.

Zum gegenwärtigen Zeitpunkt werden weltweit über 11 Millionen Tonnen Polyurethan pro Jahr produziert. Unter dem Aspekt einer nachhaltigeren Produktionsweise ist der Einsatz von zumindest teilweise aus nachwachsenden Rohstoffquellen stammenden Polyolen als Polyurethan-Rohstoffe erstrebenswert. Als $C_1$-Bausteine kommen insbesondere $CO_2$ und Formaldehyd in Frage. Diese sind nicht an die Verfügbarkeit von Erdöl gebunden und zudem auch noch preiswert.

Formaldehyd lässt sich zu Polyoxymethylen (POM) polymerisieren. Werden polymere Polyole als Starter verwendet, erhält man hierdurch Polyoxymethylen-Copolymere. Als Quellen für Formaldehyd dienen in der Regel gasförmiges Formaldehyd (monomer), Paraformaldehyd (polymer) und Trioxan (trimer). Die Reaktionsbedingungen der Polymerisation haben auch einen großen Einfluss auf die Struktur der so erhaltenen Block-Copolymere: die anionische Polymerisation von gasförmigem Formaldehyd in Gegenwart eines beispielsweise difunktionellen Starter-Polyols führt zu einer Triblock-Struktur, in der das Starter-Polyol zwei POM-Ketten trägt, welche den Abschluss des Block-Copolymers bilden.

Wenn Formaldehyd in Gegenwart eines polymeren Polyols polymerisiert werden, lassen sich Block-Copolymere erhalten. Gegenüber Polyoxymethylen-Homopolymeren gleichen Molekulargewichts ist die Teilkristallinität in solchen Block-Copolymeren typischerweise herabgesetzt, was üblicherweise ebenfalls zu einer Herabsetzung von Glasübergangstemperaturen, Schmelzpunkten und Viskositäten führt. Die Anwesenheit von zusätzlichen, aus einem Startermolekül stammenden Oligomer-Blöcken führt weiterhin typischerweise zu einer Erhöhung der chemischen und thermischen Stabilität.

WO 2014/095679 A1 beschreibt ein Verfahren zur Herstellung von NCO-modifizierten Polyoxymethylen-Copolymeren, umfassend den Schritt der Polymerisation von Formaldehyd in Gegenwart eines Katalysators, wobei die Polymerisation von Formaldehyd weiterhin in Gegenwart einer Starterverbindung mit mindestens 2 Zerewitinoff-aktiven H-Atomen erfolgt, wobei ein Zwischenprodukt erhalten wird und das erhaltene Zwischenprodukt mit einem Isocyanat umgesetzt wird, wobei ein NCO-modifiziertes Polyoxymethylen-Copolymer erhalten wird. Es werden Polyisocyanate als mögliche Reagenzien zur NCO-Modifizierung genannt.

WO 2014/095861 A2 offenbart ein Verfahren zur Herstellung von nicht-alternierenden Formaldehyd/$CO_2$-Copolymeren umfassend den Schritt der Reaktion von Formaldehyd oder einer Formaldehyd freisetzenden Verbindung mit Kohlendioxid in Gegenwart eines Katalysatorsystems, dadurch gekennzeichnet, dass das Katalysatorsystem eine Lewis-saure Komponente und eine basische Komponente umfasst, wobei die Lewis-saure Komponente unter Reaktionsbedingungen zumindest zeitweise koordinativ ungesättigt ist und wobei die basische Komponente einen $pK_b$-Wert von > 0 aufweist. Die Lewis-saure Komponente kann ein Metall ausgewählt aus der Gruppe Bor, Zinn, Zink. Kupfer, Bismuth, Molybdän, Wolfram und/oder Vanadium sein. Die basische Komponente kann aus der Gruppe Alkalicarbonate, Alkalicarboxylate, 1,4-Diazabicyclo[2.2.2]octan (DABCO), 4-(Dimethylamino)-pyridin (DMAP), 1,8-Diazabicyclo[5.4.0]undec-7-en (DBU), Triazabicyclo[4.4.0]dec-5-ene (TBD), 7-Methyl-1,5,7-triazabicycio[4.4.0]dec-5-en (MTBD), 2,6-Lutidin, N-heterocyclische Carbene und/oder Trimesitylphosphin sein.

Unter dem Gesichtspunkt der Nachhaltigkeit ist ein möglichst hoher Anteil von Formaldehyd in Polymeren erstrebenswert. Die vorliegende Erfindung hat sich daher die Aufgabe gestellt, ein Verfahren zur Herstellung von Polyoxymethylen-Block-Copolymeren bereitzustellen, bei dem der Anteil des eingebauten Formaldehyds erhöht wird.

Erfindungsgemäß gelöst wird die Aufgabe durch ein Verfahren zur Herstellung eines Polyoxymethylen-Block-Copolymers, umfassend die Schritte:

(i) Bereitstellen einer polymeren Starterverbindung mit mindestens zwei Zerewitinoffaktiven H-Atomen und einer Katalysatorkomponente in einem Reaktionsgefäß;

(ii) Eintragen von Formaldehyd in das Reaktionsgefäß;

(iii) Eintragen eines Alkylenoxids in das Reaktionsgefäß;

wobei die polymere Starterverbindung ein Polyethylenglykol ist und dass die Katalysatorkomponente einen Zinn umfassenden Katalysator und einen Bismut umfassenden Katalysator aufweist.

Es wurde überraschenderweise gefunden, dass beim Einsatz von Polyethylenglykol-Startern in Verbindung

mit dem Katalysatorsystem ein höherer Anteil an Formaldehyd eingebaut werden kann als beispielsweise im Fall von Polypropylenglykolen als Startern. Es war weiterhin nicht zu erwarten, dass die aufgebauten Polyoxymethylenketten stabil gegenüber dem bereits zu Beginn der Reaktion vorhandenen Bismut-Katalysator sein würden. Ein durch den Bismut-Katalysator vermitteltes Aufbrechen von Polyoxymethylenketten wäre eher zu erwarten gewesen.

Beim Eintragen des Formaldehyds in das Reaktionsgefäß wird der Formaldehyd auf die Starterverbindung aufpolymerisiert. Die anschließende, durch den Bismut-Katalysator vermittelte Reaktion mit Alkylenoxid dient dem Aufbau von terminalen Polyalkylenoxid-Einheiten. Hierdurch werden die Polyoxymethylen-Ketten stabilisiert.

Der Zinn-Katalysator ist vorzugsweise ein Zinn(II)-Katalysator. Der Bismut-Katalysator ist vorzugsweise in Bismut(III)-Katalysator.

Die erhaltenen Polyoxymethylen-Block-Copolymere bieten gegenüber existierenden bi- oder höherfunktionellen Polymeren eine Reihe von Vorteilen. So können bestimmte physikalische Eigenschaften wie Glasübergangstemperaturen, Schmelzbereiche und Viskositäten über die Länge der Polyoxymethylen-Blöcke im Verhältnis zu den zusätzlichen Oligomeren gezielt angesteuert werden.

Gegenüber Polyoxymethylen-Homopolymeren gleichen Molekulargewichts ist die Teilkristallinität in den erfindungsgemäßen Polyoxymethylen-Block-Copolymeren typischerweise herabgesetzt, was üblicherweise ebenfalls zu einer Herabsetzung von Glasübergangstemperaturen, Schmelzpunkten und Viskositäten führt. Die Anwesenheit von zusätzlichen, aus einem Startermolekül stammenden Oligomer-Blöcken führt weiterhin typischerweise zu einer Erhöhung der chemischen und thermischen Stabilität.

Polyoxymethylen-Homopolymere sind typischerweise auf eine Funktionalität $F \leq 2$ beschränkt. Über den Einsatz von Starterverbindungen mit einer Funktionalität $F \geq 2$ (beispielsweise $\geq 3$) ist im Gegensatz dazu der Zugang zu Polyoxymethylen-Block-Copolymeren mit einer Funktionalität $F > 2$ möglich.

Gegenüber Polyetherpolyolen gleichen Molekulargewichts ist der Anteil an Polyoxyalkylen-Einheiten, die aus den entsprechenden Alkylenoxiden hergestellt werden, um den Polyoxymethylen-Anteil verringert, was zu einer vorteilhaften Energiebilanz des Produktes führt. Physikalische Eigenschaften wie Glasübergangstemperaturen, Schmelzbereiche und Viskositäten können für ein gegebenes Molekulargewicht über die Länge der Polyoxymethylen-Blöcke im Verhältnis zu den Polyether-Blöcken gezielt angesteuert werden.

Polyoxymethylen-Block-Copolymere im Sinne der Erfindung bezeichnen polymere Verbindungen, die mindestens einen Polyoxymethylen-Block sowie mindestens einen zusätzlichen oligomeren oder polymeren Block enthalten und vorzugsweise ein im mittleren vierstelligen Bereich liegendes Molekulargewicht nicht überschreiten.

Ein Polyoxymethylen-Block im Sinne der Erfindung umfasst mindestens eine und vorzugsweise höchstens 150 direkt miteinander verknüpfte Oxymethylen-Einheiten.

Formaldehyd kann in gasförmigem Zustand, ggf. als Mischung mit Inertgasen wie z.B. Stickstoff oder Argon oder als Mischung mit gasförmigem, überkritischem oder flüssigem Kohlendioxid, oder als Formaldehyd-Lösung eingesetzt werden. Bei Formaldehyd-Lösungen kann es sich um wässrige Formaldehyd-Lösungen mit einem Formaldehyd-Gehalt zwischen 1 Gew.% und 37 Gew.% handeln, die gegebenenfalls bis zu 15 Gew.% Methanol als Stabilisator enthalten können. Alternativ können Lösungen von Formaldehyd in polaren organischen Lösungsmitteln wie z.B. Methanol oder höheren ein- oder mehrwertigen Alkoholen, 1,4-Dioxan, Acetonitril, N,N-Dimethylformamid (DMF), N,N-Dimethylacetamid, Dimethylsulfoxid (DMSO), zyklischen Carbonaten, z.B. Ethylencarbonat oder Propylencarbonat, N Methylpyrrolidon (NMP), Sulfolan, Tetramethylharnstoff, N,N'-Dimethylethylenharnstoff oder Mischungen derselben untereinander, mit Wasser und/oder anderen Lösungsmitteln eingesetzt werden. Die Anwesenheit weiterer Substanzen in Lösung ist ebenfalls mit eingeschlossen. Bevorzugt ist der Einsatz von Gemischen von gasförmigem Formaldehyd mit Argon oder Kohlendioxid. Ebenfalls bevorzugt ist der Einsatz von Lösungen von Formaldehyd in aprotischen polaren organischen Lösungsmitteln wie z.B. 1,4-Dioxan, Acetonitril, N,N-Dimethylformamid (DMF), N,N-Dimethylacetamid, Dimethylsulfoxid (DMSO), zyklischen Carbonaten, z.B. Ethylencarbonat oder Propylencarbonat, N Methylpyrrolidon (NMP), Sulfolan, Tetramethylharnstoff, N,N'-Dimethylethylenharnstoff oder Mischungen derselben untereinander, und/oder anderen Lösungsmitteln.

Alternativ kann Formaldehyd *in situ* aus einer geeigneten Formaldehyd-Quelle generiert werden. Als Formaldehyd-Quelle können Substanzen zum Einsatz kommen, welche chemisch gebundenen Formaldehyd, üblicherweise in Form von Oxymethylen-Gruppen, enthalten, und die unter geeigneten Bedingungen in der Lage sind, Formaldehyd freizusetzen. Geeignete Bedingungen für die Freisetzung können z.B. erhöhte Temperaturen und/oder den Einsatz von Katalysatoren und/oder die Gegenwart von Säuren, Basen oder anderen Reagenzien, die zu der Freisetzung von monomerem Formaldehyd führen, beinhalten. Bevorzugte Formaldehyd-Quellen sind 1,3,5-Trioxan, Paraformaldehyd, Polyoxymethylen, Dimethylacetal, 1,3-Dioxolan, 1,3-Dioxan und/oder 1,3-Dioxepan, besonders bevorzugt sind 1,3,5-Trioxan und Paraformaldehyd.

Es ist bevorzugt, dass das erfindungsgemäße Verfahren in Substanz, also ohne zusätzliches Lösungsmittel, durchgeführt wird. Wird doch der Einsatz eines Lösungsmittels gewählt, können beispielsweise Wasser, Methanol oder höhere ein- oder mehrwertige Alkohole, unpolare organische Lösungsmittel wie z.B. lineare oder verzweigte Alkane oder Alkan-Gemische, Toluol, die verschiedenen Xylol-Isomere oder Gemische derselben, Mesitylen, ein oder mehrfach

halogenierte Aromaten oder Alkane, offenkettige oder zyklische Ether wie z.B. Tetrahydrofuran (THF) oder Methyl-*tert*-butylether (MTBE), offenkettige oder zyklische Ester, oder polare aprotische Lösungsmittel wie z.B. 1,4-Dioxan, Acetonitril, *N,N*-Dimethylformamid (DMF), *N,N*-Dimethylacetamid, Dimethylsulfoxid (DMSO), zyklische Carbonate, z.B. Ethylencarbonat oder Propylencarbonat, *N*-Methylpyrrolidon (NMP), Sulfolan, Tetramethylharnstoff, *N,N'*-Dimethylethylenharnstoff oder Mischungen derselben untereinander, mit Wasser und/oder anderen Lösungsmitteln eingesetzt werden. Auch der Einsatz von flüssigem oder überkritischem Kohlendioxid als Lösungsmittel in Reinsubstanz oder als Gemisch mit einem der oben genannten Lösungsmittel ist möglich. Bevorzugt sind offenkettige oder zyklische Ether wie z.B. Tetrahydrofuran (THF) oder Methyl-*tert*-butylether (MTBE), offenkettige oder zyklische Ester, polare aprotische Lösungsmittel wie z.B. 1,4-Dioxan, Acetonitril, *N,N*-Dimethylformamid (DMF), *N,N*-Dimethylacetamid, Dimethylsulfoxid (DMSO), zyklische Carbonate, z.B. Ethylencarbonat oder Propylencarbonat, *N*-Methylpyrrolidon (NMP), Sulfolan, Tetramethylharnstoff, *N,N'*-Dimethylethylenharnstoff oder Mischungen derselben untereinander und/oder anderen Lösungsmitteln sowie flüssiges oder überkritisches Kohlendioxid.

Die als Starterverbindungen eingesetzten Polyetherpolyole (der Begriff wird synonym zu Polyethylenglykolen verwendet) können beispielsweise ein zahlenmittleres Molekulargewicht $M_n$ von ≥ 62 g/mol bis ≤ 8000 g/mol, bevorzugt von ≥ 90 g/mol bis ≤ 5000 g/mol und mehr bevorzugt von ≥ 92 g/mol bis ≤ 2000 g/mol aufweisen.

Die durchschnittliche OH-Funktionalität der Polyole ist ≥ 2, beispielsweise in einem Bereich von > 2 bis ≤ 6, vorzugsweise von ≥ 2,0 bis ≤ 4 und mehr bevorzugt von ≥ 2,0 bis ≤ 3.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxide und/oder Epichlorhydrin an di- oder polyfunktionelle Startermoleküle.

Geeignete Startermoleküle für die Polyetherpolyole sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren.

Die Reaktion kann im Batch-Verfahren, im Semi-Batch-Verfahren oder im kontinuierlichen Verfahren durchgeführt werden. Im bevorzugten Semi-Batch-Verfahren wird ein Gemisch aus Starter, Katalysatoren und ggf. einem Lösungsmittel vorgelegt und Formaldehyd bzw. die Formaldehyd-Quelle in Reinsubstanz als Gas oder Flüssigkeit oder in Lösung der Reaktion zudosiert. Die zudosierte Menge an Formaldehyd bzw. in der Formaldehyd-Quelle enthaltenen Formaldehyd-Äquivalenten wird so gewählt, dass das gewünschte Molekulargewicht erreicht wird.

Die Reaktion wird beispielsweise bei einer Temperatur zwischen 20 und 200 °C, bevorzugt zwischen 20 und 120 °C durchgeführt. Bei Verwendung einer Formaldehyd-Quelle, die chemisch gebundenen Formaldehyd enthält, liegt die Reaktionstemperatur oberhalb der unter den gegebenen Bedingungen zur Freisetzung von Formaldehyd benötigten Temperatur. Bei Anwesenheit von geeigneten Katalysatoren, die die Freisetzung von Formaldehyd beschleunigen, kann die Reaktionstemperatur unterhalb der für die nicht-katalysierte Freisetzung von Formaldehyd nötigen Temperatur liegen. Gegebenenfalls können die Katalysatoren für die Herstellung der erfindungsgemäßen Polyoxymethylen-Block-Copolymere ebenfalls als Katalysatoren für die Freisetzung von Formaldehyd fungieren.

Der Druck während der Polymerisation von Formaldehyd in Anwesenheit der Starterverbindung und gegebenenfalls zusätzlichen Comonomers beträgt 1 bis 200 bar. Bei der Verwendung von gasförmigem Formaldehyd beträgt der Druck bevorzugt 5 bis 100 bar, besonders bevorzugt 10 bis 50 bar.

Die Reaktionszeit für die Polymerisation beträgt beispielsweise 0.05 bis 120 Stunden, bevorzugt 0.5 bis 48 Stunden, besonders bevorzugt 1 bis 24 Stunden. Als Reaktionszeit wird die Zeitspanne betrachtet, während der sich Katalysatoren, Formaldehyd und Starterverbindung bei Reaktionstemperatur in direktem Kontakt befinden. Insbesondere bei der Durchführung im Semi-Batch-Verfahren, wie z.B. beim Einleiten von gasförmigem Formaldehyd in die Reaktionsmischung, richtet sich die Reaktionszeit nach der Menge des zudosierten Formaldehyds bzw. der zudosierten Formaldehyd-Äquivalente.

Bei der Herstellung der erfindungsgemäßen Polyoxymethylen-Block-Copolymere in Anwesenheit von Lösungsmitteln kann vor ihrer weiteren Umsetzung eine Entfernung der flüchtigen Komponenten, z.B. durch Vakuumdestillation oder Dünnschichtverdampfung, erfolgen. Zusätzliche Reinigungsschritte wie z.B. Extraktion, Fällung und/oder Filtration, z.B. zum Entfernen des Katalysators, sind ebenfalls eingeschlossen.

Ausführungsformen und weitere Aspekte der Erfindung werden nachfolgend geschildert. Sie können beliebig miteinander kombiniert werden, sofern sich aus dem Kontext nicht eindeutig das Gegenteil ergibt.

In einer Ausführungsform des Verfahrens ist der Zinn umfassende Katalysator Dibutylzinndilaurat und/oder Dibutylzinnoxid.

In einer weiteren Ausführungsform des Verfahrens ist der Bismut umfassende Katalysator Bismut(III)-Triflat ($Bi(OTf)_3$; $Bi(CF_3SO_3)_3$), Bismut(III)-Mesylat ($Bi(OMs)_3$; $Bi(CH_3SO_3)_3$), Bismut(III)-Tosylat ($Bi(OTs)_3$; $Bi(CH_3\text{-}C_6H_4\text{-}SO_3)_3$) und/oder Bismut-tri(2-ethylhexanoat).

In einer weiteren Ausführungsform des Verfahrens liegen in der Katalysatorkomponente der Zinn umfassende

Katalysator und der Bismut umfassende Katalysator in einem Molverhältnis von ≥1:2 bis ≤ 2:1 zueinander vor. Bevorzugt ist ein Verhältnis von ≥1:1.1 bis ≤ 1.1:1.

In einer weiteren Ausführungsform des Verfahrens wird die Katalysatorkomponente in einem molaren Verhältnis von ≥ 0.1 mol% bis ≤ 2 mol-% zu der polymeren Starterverbindung eingesetzt. Bevorzugt ist ein molares Verhältnis von ≥ 0.5 mol-% bis ≤ 1.5 mol-%. Für die Bestimmung des molaren Verhältnisses wird die Stoffmenge der Bismut- und der Zinnkatalysatoren in der Katalysatorkomponente addiert.

In einer weiteren Ausführungsform des Verfahrens ist die polymere Starterverbindung ein difunktionelles oder trifunktionelles Polyethylenglykol mit einem zahlenmittleren Molekulargewicht $M_n$ von ≥ 500 g/mol bis ≤ 2000 g/mol.

In einer weiteren Ausführungsform des Verfahrens wird das Formaldehyd in gasförmiger Form in das Reaktionsgefäß eingetragen.

In einer weiteren Ausführungsform des Verfahrens werden als Alkylenoxid Ethylenoxid, Propylenoxid und/oder Styroloxid eingesetzt.

In einer weiteren Ausführungsform des Verfahrens wird die Reaktion bei einer Temperatur von > 20 °C bis ≤ 90 °C durchgeführt. Bevorzugt ist eine Reaktionstemperatur von ≥ 30 °C bis ≤ 60 °C.

In einer weiteren Ausführungsform des Verfahrens wird die Reaktion unter Beaufschlagung von Kohlendioxid mit einem $CO_2$-Partialdruck von ≥ 1 bar bis ≤ 50 bar durchgeführt. Der $CO_2$-Partialdruck beträgt vorzugsweise > 10 bar bis ≤ 30 bar. Bei solchen Partialdrücken wird $CO_2$ nicht oder nur in bedeutungsloser Menge in die wachsende Polymerkette eingebaut. Jedoch scheint es, ohne auf eine Theorie beschränkt zu sein, zu einer temporären Stabilisierung der Formaldehydblöcke während des Kettenwachstums als Kohlensäurehalbester zu kommen. Dieses wird beispielhaft in dem nachfolgenden Schema verdeutlicht:

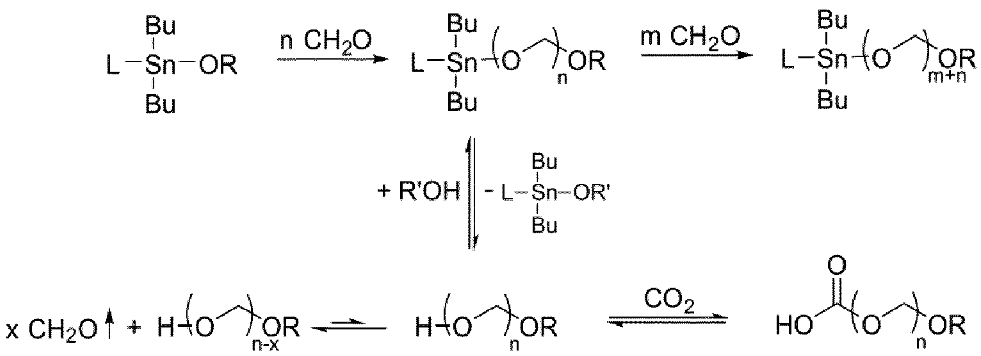


In einer weiteren Ausführungsform des Verfahrens wird nach dem Eintragen des Alkylenoxids der Schritt durchgeführt:

- Isolieren eines Polyoxymethylen-Block-Copolymers mit einem Gehalt an eingebautem Formaldehyd von ≥ 15 Gewichts-%.

Der Gehalt an eingebautem Formaldehyd beträgt vorzugsweise ≥ 19 Gewichts-% und kann über eine Massenbilanz in der Reaktionsführung ermittelt werden. Es ist auch möglich, durch Auswertung des $^1$H-NMR-Spektrums, wie im experimentellen Teil beschrieben, den Gehalt an eingebautem Formaldehyd zu bestimmen.

Die Erfindung betrifft ebenfalls ein Polyoxymethylen-Block-Copolymer, erhältlich durch ein erfindungsgemäßes Verfahren, mit einem Gehalt an eingebautem Formaldehyd von ≥ 15 Gewichts-% und einem Gewichtsverhältnis von eingebautem Formaldehyd zu Ethylenoxideinheiten aus der Starterverbindung von ≥ 25:75. Auch hier kann der Gehalt an eingebautem Formaldehyd vorzugsweise ≥ 19 Gewichts-% betragen und über eine Massenbilanz in der Reaktionsführung ermittelt werden. Es ist auch möglich, durch Auswertung des $^1$H-NMR-Spektrums, wie im experimentellen Teil beschrieben, den Gehalt an eingebautem Formaldehyd zu bestimmen. Ferner beträgt das Gewichtsverhältnis von eingebautem Formaldehyd zu Ethylenoxideinheiten aus der Starterverbindung vorzugsweise ≥ 25:75 bis ≤ 50:50. Dieses Gewichtsverhältnis kann durch Auswertung des $^1$H-NMR-Spektrums, wie im experimentellen Teil beschrieben, ermittelt werden.

In einer Ausführungsform des Polyoxymethylen-Block-Copolymers weist dieses eine Zersetzungstemperatur, bestimmt durch thermogravimetrische Analyse, von ≤ 150 °C auf. Damit liegt die Zersetzungstemperatur niedriger als bei Polypropylenglykol-basierten Polyoxymethylen-Block-Copolymeren. Vorzugsweise beträgt die Zersetzungstemperatur ≥ 90 °C bis ≤ 130 °C.

Ein weiterer Gegenstand der Erfindung ist die Verwendung eines erfindungsgemäßen Polyoxymethylen-Block-Copolymers zur Herstellung von Polyurethanen.

Die Erfindung betrifft somit ebenfalls ein Polyurethanpolymer, erhältlich aus der Reaktion einer Isocyanatkomponente mit einer Polyolkomponente, wobei die Polyolkomponente ein erfindungsgemäßes Polyoxymethylen-Block-Copolymer umfasst. Das Isocyanat kann insbesondere ein aliphatisches oder aromatisches Di- oder Polyisocyanat. Beispiele sind 1,4-Butylendiisocyanat, 1,5-Pentandiisocyanat, 1,6-Hexamethylendiisocyanat (HDI) bzw. deren Dimere, Trimere, Pentamere, Heptamere oder Nonamere oder Gemische derselben, Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit $C_1$ bis $C_6$-Alkylgruppen. Bevorzugt ist hierbei ein Isocyanat aus der Diphenylmethandiisocyanatreihe.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Es ist möglich, dass das Isocyanat ein Prepolymer ist, welches erhältlich ist durch Reaktion eines Isocyanats mit einer NCO-Funktionalität von ≥ 2 und Polyolen mit einem Molekulargewicht von > 62 g/mol bis ≤ 8000 g/mol und OH-Funktionalitäten von ≥ 1,5 bis ≤ 6.

Beispiele

Die vorliegende Erfindung wird anhand der nachfolgenden Beispiele erläutert, ohne jedoch darauf beschränkt zu sein.

PEG 600: Funktionalität F=2,0, OH-Zahl = 187,0 mg(KOH)/g, Covestro AG

PPG 1000: Funktionalität ist 2, mittlere OHZ ist 111,4, Desmophen1111BD, Covestro AG

Dibutylzinndilaurat (DBTL) [77-58-7], Aldrich (Kat.-Nr. 291234), 95%

Bismuth(III)triflat [88189-03-1]: Aldrich, Katalog-Nr. 633305

*Methoden*

$^1$H-NMR-Spektroskopie: Die Messungen erfolgten auf einem Bruker AV400 (400 MHz); die Kalibrierung der chemischen Verschiebungen erfolgte relativ zum Lösungsmittelsignal ($CDCl_3$, $\delta$ = 7,26 ppm).

Der Gehalt an eingebautem Formaldehyd in den Polyoxymethylen-Block-Copolymeren lässt sich wie folgt bestimmen:

Bei der Copolymerisation resultierte das Oxymethylenepolyetherpolyol, welches einerseits in der nachfolgenden Formel gezeigte Oxymethylen-Einheiten enthält,

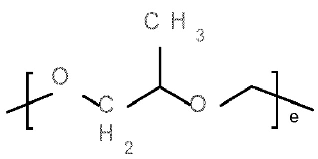 bzw. 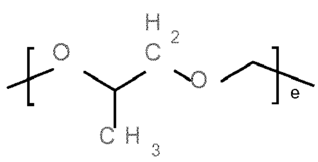

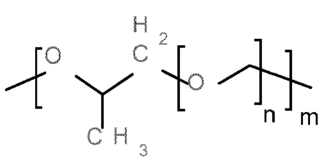 bzw. 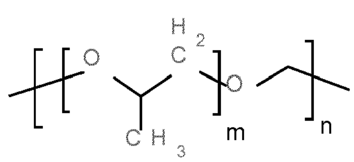

und andererseits in der nachfolgenden Formel gezeigte Polyether-Einheiten enthält.

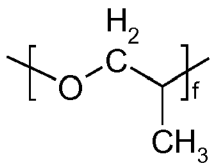

bzw.

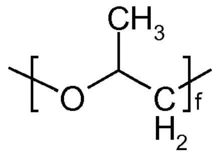

Das molare Verhältnis von Oxymethylengruppen (aus Formaldehyd) zu Ethergruppen im Oxymethylenepolyetherpolyol sowie der Anteil des umgesetzten Formaldehyds (C in mol%) wurden mittels 1H-NMR Spektroskopie bestimmt.

Die Probe wurde jeweils in deuteriertem Chloroform gelöst und auf einem Spektrometer der Firma Bruker (AV400, 400 MHz) vermessen.

Die relevanten Resonanzen im $^1$H-NMR Spektrum (bezogen auf TMS = 0 ppm), die zur Integration verwendet wurden, sind wie folgt:

I1: 1,11 - 1,17: Methylgruppe der Polyether-Einheiten, Fläche der Resonanz entspricht drei H Atomen

12: 1,25 - 1,32: Methylgruppe der Polycarbonat-Einheiten, Fläche der Resonanz entspricht drei H Atomen (Wenn PEC Einheiten anwesend sind).

13: 3,093-4,143: CH- und $CH_2$- Gruppe der Polyether-Einheiten, Fläche der Resonanz entspricht drei H Atomen

14: 4,40-5,20: Methylgruppe der Oxymethylen-Einheiten, Fläche der Resonanz entspricht zwei H Atomen

Angegeben sind das molare Verhältnis Oxymethylengruppen zu Ethergruppen im Oxymethylen polyether polyol sowie der Anteil des umgesetzten Propylenoxids (C in mol%).

Unter Berücksichtigung der relativen Intensitäten, errechnet sich der relative Anteil $n_i$ der einzelnen Struktureinheiten i mit den Integralen $I_i$ nach:

(PO): n1 = I1/3

(PEC): n2 = 12/3

($CH_2O$): n4 = 14/2

Molares Verhältnis von Oxymethylengruppen zu Ethergruppen im Polymer:

($CH_2O$)/(PO) = I4 / I1

Der molare Anteil des umgesetzten Formaldehyds (C in mol%) bezogen auf die Summe der bei der Aktivierung und der Copolymerisation eingesetzten Menge an Propylenoxid, berechnet sich nach der Formel:

$$C = [\ (I4/2)/\ ((I1/3)+(I2/3)+(I3/3)+(I4/2))]\ *\ 100\%$$

Die Signale für $CH_2O$ und PEC-CH (wenn PEC anwesend ist) überlappen teilweise. Deshalb werden alle Flächenintegrale dieser Signale aufsummiert und um den PEC-CH Anteil korrigiert.

Bei Abwesenheit von unterschiedlichen Endgruppen kann für F-funktionelle (wobei F für bihydroxyfunktionelle Polyole 2 ist, und für trifunktionelle Polyole 3 ist) Oxymethylenpolyethercopolymere die durchschnittliche Summenformel mit Hilfe des per OH-Zahl ermittelten durchschnittlichen Molekulargewichtes M.W. errechnet werden nach:

$$MW = (F \times 1000 \times MW_{KOH}) / (\text{OH-Zahl})$$

$$f = MW/\ \Sigma((I_i/\#H_i)*MW_i)$$

wobei $I_i$ ist die Summe der Integralen der Einheit "i" und $\#H_i$ ist die Zahl der Protonen in Einheit "i".

Multiplikation des erhaltenen Faktors f mit den relativen Anteilen $n_i$ (i = PE, PEC, $CH_2O$) ergibt die durchschnittliche Anzahl $x_i$ der Einheiten i in der durchschnittlichen Summenformel

#PO: ((I1/3) × f) - $(\#PO)_{starter}$

#($CH_2O$): (14/2) × f

Gel-Permeations-Chromatographie (GPC): Die Messungen erfolgten auf einem Agilent 1200 Series (G1310A Iso Pump, G1329A ALS, G1316A TCC, G1362A RID, G1365D MWD), Detektion über RID; Elutionsmittel: Chloroform (GPC grade), Flussrate 1.0 ml/min; Säulenkombination: PSS SDV Vorsäule 8×50 mm (5 μm), 2× PSS SDV linear S 8×300 ml (5 μm). Polystyrolproben bekannter Molmasse der Firma "PSS Polymer Standards Service" wurden zur Kalibrierung verwendet. Als Messaufnahme- und Auswertungssoftware wurde das Programmpaket "PSS WinGPC Unity" verwendet. Die Aufnahme der GPC Chromatogramme erfolgte in Anlehnung an DIN 55672-1.

TGA (Thermogravimetrische Analysen) wurden mit einem Mettler Toledo TGA/DSC 1 durchgeführt. Es wurden zwischen 6 und 20 mg der zu vermessenden Probe mit einer Heizrate von 10 K/min von 25 °C auf 600 °C erhitzt und der relative Gewichtsverlust in Abhängigkeit von der Temperatur ermittelt. Als Auswertesoftware wurde STARe SW 11.00 verwendet. Zur Ermittlung der verschiedenen Zersetzungsstufen wurde, sofern nicht anders erwähnt, ein tangentielles Auswerteverfahren angewendet. Als Zersetzungstemperatur wird der "Midpoint" angegeben.

Für die Reaktionen wurde eine Versuchsapparatur verwendet, die aus einem 970 ml Edelstahlautoklaven ("Depolymerisationsreaktor" R1) und einem 1700 ml Edelstahlautoklaven ("Polymerisationsreaktor" R2) bestand, welche über eine beheizbare und mit einem Ventil absperrbare Brücke zum Transfer des in R1 generierten Formaldehyd-Gases miteinander verbunden waren. Die Brücke bestand aus zwei beheizbaren 1/4-Zoll-Kapillaren, die über einen beheizbaren 200 ml Edelstahlbehälter verbunden waren, welcher mit 100 g wasserfreiem Molsieb A3 als Wasser-Absorber befüllt war. Beide Reaktoren waren mit Hohlwellenrührer und Manometer ausgestattet und unabhängig voneinander beheizbar. Die Gaszufuhr zu R1 erfolgte über ein Tauchrohr. Die Dosiergeschwindigkeit wurde mit einem Massenflussregler (MFC 1, Kapazität: 6 1/min, für Argon bzw. Stickstoff als Trägergas) oder einem Coriolis-Flussregler (CFC1, Kapazität: 700 g/h, für $CO_2$ als Trägergas) geregelt. Der mit Formaldehyd angereicherte Gasstrom wurde durch die Brücke von R1 in R2 geleitet. R2 verfügte über eine zusätzliche Gaszufuhr für $CO_2$, deren Dosiergeschwindigkeit über einen separaten Coriolis-Flussregler (CFC2, Kapazität: 700 g/min) reguliert wurde. Zusätzlich verfügte R2 über eine Flüssigzuleitung, über die Epoxid zudosiert wurde. Die Zudosierung des Epoxides erfolgte durch Beaufschlagung des Epoxid-Vorratsgefäßes mit Stickstoffgas unter einem Druck, der mindestens 10 bar über dem Reaktionsdruck p lag, wobei der Massenstrom durch einen Coriolis-Flussregler (CFC3, Kapazität: 200 g/min) geregelt wurde. Eine dritte Zuleitung erlaubte die Zudosierung weiterer Flüssigreagenzien über eine HPLC-Pumpe. An R2 befand sich eine beheizbare 1/4-Zoll-Kapillare als Gasauslass, die mit einem beheizbaren Vordruckregler (back pressure regulator, BPR) versehen war, welcher einen konstanten Druck p im Reaktorsystem gewährleistete.

Die in den Beispielen eingesetzten Druckreaktoren hatten eine Höhe (innen) von 21 cm (R1) bzw. 15 cm (R2) und einen Innendurchmesser von 10 cm (R1 und R2). Die Reaktoren waren ausgestattet mit einem elektrischen Heizmantel (150 Watt maximale Heizleistung). Weiterhin waren die Reaktoren mit einem Einleitrohr sowie je einem Thermofühler mit 6 mm Durchmesser ausgestattet, der bis 60 mm über den Boden in den Reaktor ragte.

Bei dem in den Beispielen eingesetzten Hohlwellenrührer handelte es sich um einen Hohlwellenrührer, bei dem das Gas über eine hohle Welle des Rührers in die Reaktionsmischung eingeleitet wurde. Der auf der Hohlwelle angebrachte Rührkörper wies vier Arme auf, hatte einen Durchmesser von 50 mm und eine Höhe von 19 mm. An jedem Ende des Arms war ein Gasauslass angebracht, der einen Durchmesser von 3 mm aufwies. Durch die Drehung des Rührers entstand ein Unterdruck derart, dass das über der Reaktionsmischung befindliche Gas ($CO_2$ und/oder Argon oder Stickstoff und ggf. Formaldehyd) abgesaugt wurde und über die Hohlwelle des Rührers in die Reaktionsmischung eingeleitet wurde.

Vergleichsbeispiel: Polypropylenglykol als Starter (PPG1000, 1007 g/mol)

Die synthetische Darstellung der Formaldehyd Block-Copolymere mit gasförmigem Formaldehyd als Formaldehyd-Quelle erfolgte in einem zweiteiligen Reaktorsystem. Dazu wurden die Starterverbindung, Polypropylenglykol PPG1000 (1007 g/mol, 300 g, 0.3000 mol) zusammen mit Bismut-(III)-triflat (0.98 g; 0.001 5mol) und Dibutylzinndilaurat (0.95 g; 0.0015 mol) vorgelegt. Anschließend wurde Formaldehyd-Gas bei einer Temperatur von 30°C und einem Druck von 20 bar eingeleitet. Dies geschah über einen Zeitraum von 11h. Nach der Zugabe des Formaldehyds wurde Propylenoxid (232 g, 4.0025 mol) zugesetzt. Durch mehrstündiges Rühren über 48 h bei 40 °C wurde die Reaktion komplettiert und durch Zugabe von 20 ml gesättigter Natriumthiosulfatlösung beendigt. Zur Aufreinigung wurde die rohe Produkt-Mischung in 300 ml Dichlormethan aufgenommen, die wässrige Phase abgetrennt und die organische Lösung über Magnesiumsulfat getrocknet. Das Block-Copolymer wurde durch Einengen im Vakuum erhalten.

| | |
|---|---|
| Gehalt Formaldehyd | 12 Gew.-% |
| Gehalt Polypropylenglykol | 88 Gew.-% |
| Molekulargewicht | 1530 g/mol |
| Polydispersitätsindex | 2.0 |
| Thermische Zersetzung | 200 °C |

Beispiel 1: Polyethylenglykol als Starter (PEG600. 570 - 630 g/mol)

Die synthetische Darstellung der Formaldehyd Block-Copolymere mit gasförmigem Formaldehyd als Formaldehyd-Quelle erfolgte in einem zweiteiligen Reaktorsystem. Dazu wurden die Starterverbindung, Polypropylenglykol PEG600 (670-630g/mol, 300 g, 0.5000 mol) zusammen mit Bismut-(III)-triflat (1.64 g; 0.0025 mol) und Dibutylzinndilaurat (1.58 g; 0.0025 mol) vorgelegt. Anschließend wurde Formaldehyd-Gas bei einer Temperatur von 30 °C und einem Druck von 20 bar eingeleitet. Dies geschah über einen Zeitraum von 10 h. Nach der Zugabe des Formaldehyds wurde Propylenoxid (225 g, 0.0039 mol) zugesetzt. Durch mehrstündiges Rühren über 48 h bei 40°C wurde die Reaktion komplettiert und durch Zugabe von 20 ml gesättigter Natriumthiosulfatlösung beendigt. Zur Aufreinigung wurde die rohe Produkt-Mischung in 300 ml Dichlormethan aufgenommen, die wässrige Phase abgetrennt und die organische Lösung über Magnesiumsulfat getrocknet. Das Block-Copolymer wurde durch Einengen im Vakuum erhalten.

| | |
|---|---|
| Gehalt Formaldehyd | 24 Gew.-% |
| Gehalt Polyethylenglykol | 53 Gew.-% |
| Gehalt Polypropylenglykol | 23 Gew.-% |
| Molekulargewicht | 1135 g/mol |
| Polydispersitätsindex | 1.6 |
| Thermische Zersetzung | 75 °C |

Beispiel 2: Polyethylenglykol als Starter (PEG600, 570 - 630 g/mol)

Die synthetische Darstellung der Formaldehyd Block-Copolymere mit gasförmigem Formaldehyd als Formaldehyd-Quelle erfolgte in einem zweiteiligen Reaktorsystem. Dazu wurden die Starterverbindung, Polypropylenglykol PEG600 (570 - 630 g/mol, 309 g, 0.5150 mol) zusammen mit Bismut-(III)-triflat (0.98 g; 0.0015 mol) und Dibutylzinndilaurat (0.95 g; 0.0015 mol) vorgelegt. Anschließend wurde Formaldehyd-Gas bei einer Temperatur von 30 °C und einem Druck von 20 bar eingeleitet. Dies geschah über einen Zeitraum von 10 h. Nach der Zugabe des Formaldehyds wurde Propylenoxid (225 g, 0.0039 mol) zugesetzt. Durch mehrstündiges Rühren über 19 h bei 40°C wurde die Reaktion komplettiert und durch Zugabe von 20 ml gesättigter Natriumthiosulfatlösung beendigt. Zur Aufreinigung wurde die rohe Produkt-Mischung in 300 ml Dichlormethan aufgenommen, die wässrige Phase abgetrennt und die organische Lösung über Magnesiumsulfat getrocknet. Das Block-Copolymer wurde durch Einengen im Vakuum erhalten.

| | |
|---|---|
| Gehalt Formaldehyd | 19 Gew.-% |
| Gehalt Polyethylenglykol | 55 Gew.-% |
| Gehalt Polypropylenglykol | 23 Gew.-% |
| Molekulargewicht | 926 g/mol |
| Polydispersitätsindex | 2.4 |
| Thermische Zersetzung | 100 °C |

**Patentansprüche**

**1.** Verfahren zur Herstellung eines Polyoxymethylen-Block-Copolymers, umfassend die Schritte:

(i) Bereitstellen einer polymeren Starterverbindung mit mindestens zwei Zerewitinoffaktiven H-Atomen und einer Katalysatorkomponente in einem Reaktionsgefäß;
(ii) Eintragen von Formaldehyd in das Reaktionsgefäß;
(iii) Eintragen eines Alkylenoxids in das Reaktionsgefäß;

**dadurch gekennzeichnet, dass**
die polymere Starterverbindung ein Polyethylenglykol ist und dass die Katalysatorkomponente einen Zinn umfassenden Katalysator und einen Bismut umfassenden Katalysator aufweist.

**2.** Verfahren gemäß Anspruch 1, wobei der Zinn umfassende Katalysator Dibutylzinndilaurat und/oder Dibutylzinnoxid ist.

**3.** Verfahren gemäß Anspruch 1 oder 2, wobei der Bismut umfassende Katalysator Bismut(III)-Triflat, Bismut(III)-Mesylat, Bismut(III)-Tosylat und/oder Bismut-tri(2-ethylhexanoat) ist.

**4.** Verfahren gemäß einem der Ansprüche 1 bis 3, wobei in der Katalysatorkomponente der Zinn umfassende Katalysator und der Bismut umfassende Katalysator in einem Molverhältnis von $\geq$1:2 bis $\leq$ 2:1 zueinander vorliegen.

**5.** Verfahren gemäß einem der Ansprüche 1 bis 4, wobei die Katalysatorkomponente in einem molaren Verhältnis von $\geq$ 0.1 mol-% bis $\leq$ 2 mol-% zu der polymeren Starterverbindung eingesetzt wird.

**6.** Verfahren gemäß einem der Ansprüche 1 bis 5, wobei die polymere Starterverbindung ein difunktionelles oder trifunktionelles Polyethylenglykol mit einem zahlenmittleren Molekulargewicht $M_n$ von $\geq$ 500 g/mol bis $\leq$ 2000 g/mol ist.

**7.** Verfahren gemäß einem der Ansprüche 1 bis 6, wobei das Formaldehyd in gasförmiger Form in das Reaktionsgefäß eingetragen wird.

**8.** Verfahren gemäß einem der Ansprüche 1 bis 7, wobei als Alkylenoxid Ethylenoxid, Propylenoxid und/oder Styroloxid eingesetzt werden.

**9.** Verfahren gemäß einem der Ansprüche 1 bis 8, wobei die Reaktion bei einer Temperatur von $\geq$ 20 °C bis $\leq$ 90 °C durchgeführt wird.

**10.** Verfahren gemäß einem der Ansprüche 1 bis 9, wobei die Reaktion unter Beaufschlagung von Kohlendioxid mit einem $CO_2$-Partialdruck von $\geq$ 1 bar bis $\leq$ 50 bar durchgeführt wird.

**11.** Verfahren gemäß einem der Ansprüche 1 bis 10, wobei nach dem Eintragen des Alkylenoxids der Schritt durchgeführt wird:

- Isolieren eines Polyoxymethylen-Block-Copolymers mit einem Gehalt an eingebautem Formaldehyd von $\geq$ 15 Gewichts-%.

**12.** Polyoxymethylen-Block-Copolymer, erhältlich durch ein Verfahren gemäß einem der Ansprüche 1 bis 11, mit einem Gehalt an eingebautem Formaldehyd von $\geq$ 15 Gewichts-% und einem Gewichtsverhältnis von eingebautem Formaldehyd zu Ethylenoxideinheiten aus der Starterverbindung von $\geq$ 25:75.

**13.** Polyoxymethylen-Block-Copolymer gemäß Anspruch 12 mit einer Zersetzungstemperatur, bestimmt durch thermogravimetrische Analyse, von $\leq$ 150 °C.

**14.** Verwendung eines Polyoxymethylen-Block-Copolymers gemäß Anspruch 12 oder 13 zur Herstellung von Polyurethanen.

**15.** Polyurethanpolymer, erhältlich aus der Reaktion einer Isocyanatkomponente mit einer Polyolkomponente, wobei die Polyolkomponente ein Polyoxymethylen-Block-Copolymer gemäß Anspruch 12 oder 13 umfasst.

Europäisches Patentamt
European Patent Office
Office européen des brevets

# EUROPÄISCHER RECHERCHENBERICHT

Nummer der Anmeldung
EP 16 20 5529

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2014/095971 A2 (BAYER MATERIALSCIENCE AG [DE]) 26. Juni 2014 (2014-06-26)<br>* Anspruch 1 *<br>* Seite 1, Zeile 2 - Zeile 9 *<br>* Beispiele 1, 2, 4 *<br>* Seite 9, Zeile 20 - Zeile 29 *<br>----- | 1-15 | INV.<br>C08G2/22<br>C08G2/08<br>C08G2/38<br>C08G2/06<br>C08G18/56 |

RECHERCHIERTE SACHGEBIETE (IPC)

C08G

Der vorliegende Recherchenbericht wurde für alle Patentansprüche erstellt

1

| Recherchenort | Abschlußdatum der Recherche | Prüfer |
|---|---|---|
| München | 24. April 2017 | Paulus, Florian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 16 20 5529

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-04-2017

| Im Recherchenbericht angeführtes Patentdokument | Datum der Veröffentlichung | Mitglied(er) der Patentfamilie | Datum der Veröffentlichung |
|---|---|---|---|
| WO 2014095971 A2 | 26-06-2014 | CA 2896628 A1 | 26-06-2014 |
| | | CN 104937001 A | 23-09-2015 |
| | | EP 2935381 A2 | 28-10-2015 |
| | | JP 2016500403 A | 12-01-2016 |
| | | KR 20150097717 A | 26-08-2015 |
| | | SG 11201504408Q A | 30-07-2015 |
| | | US 2015368396 A1 | 24-12-2015 |
| | | WO 2014095971 A2 | 26-06-2014 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2014095679 A1
- WO 2014095861 A2